# EUROPÄISCHE PATENTSCHRIFT

(11) **EP 1 145 208 B1**
(45) Veröffentlichungstag und Bekanntmachung des Hinweises auf die Patenterteilung: **11.01.2012**
(21) Anmeldenummer: 00964059.0
(22) Anmeldetag: 30.08.2000
(51) Int. Cl.: G08C 23/00

(54) **VERFAHREN UND VORRICHTUNG ZUR ÜBERTRAGUNG VON STEUER- UND/ODER SENSORSIGNALEN**
METHOD AND DEVICE FOR TRANSMITTING CONTROL AND/OR SENSOR SIGNALS
PROCEDE ET DISPOSITIF DE TRANSMISSION DE SIGNAUX DE COMMANDE ET DE CAPTEUR

(30) Priorität: 07.09.1999 DE 19942508
(43) Veröffentlichungstag der Anmeldung: 17.10.2001
(73) Patentinhaber: FESTO AG & Co. KG, 73734 Esslingen (DE)
(72) Erfinder: STANICZEK, Dieter, 73773 Aichwald (DE)
(74) Vertreter: Kocher, Mark Werner
(86) Internationale Anmeldenummer: PCT/EP2000/008432
(87) Internationale Veröffentlichungsnummer: WO 2001/018763

(56) Entgegenhaltungen:
- EP-A2- 0 797 037
- DE-A- 3 147 339
- DE-A- 3 209 189
- DE-A1- 2 938 734
- DE-A1- 19 526 459
- SOVIET PATENTS ABSTRACTS Section S-X, Woche 9345, 05 Januar 1994 Derwent Publications Ltd., London, GB, Klasse W05, AN 93 359135/45, XP002901517 & SU 1774364 A1 (BASHKIR NEFTEKHIMAVTOMATIKA CONS BUR) 29 Dezember 1989,
- SOVIET INVENTIONS ILLUSTRATED Woche X39, 03 November 1976 Derwent Publications Ltd., London, GB; Klasse J6016X/39, XP002901518 & SU 483695 A (PROBLEM ADMIN INST) 26 März 1976,

## Beschreibung

Die Erfindung betrifft ein Verfahren und eine Vorrichtung zur Übertragung von Steuer- und/oder Sensorsignalen zwischen einer elektronischen Steuer- und/oder Datenempfangseinrichtung und einer pneumatischen Vorrichtung, die über eine pneumatische Leitung miteinander verbunden sind.

Zu steuernde pneumatische Vorrichtungen, wie Ventilanordnungen, Zylinder, Antriebe und dergleichen, benötigen zum einen die Zuführung von Druckluft über eine pneumatische Leitung und zum anderen elektrische Zuführungsleitungen zur Zuführung der elektrischen Steuersignale sowie Rückführungsleitungen zur Rückführung von Sensorsignalen. Sind an einer pneumatischen Vorrichtung mehrere Steuervorrichtungen, wie Ventile, und mehrere Sensoren angeordnet, so erhöht sich entsprechend die Zahl der elektrischen Leitungen, was häufig zu einer unübersichtlichen Leitungsanordnung und zu hohen Kosten für die Installation, Wartung und Reparatur führt.

Aus der DE 195 26 459 ist es zwar bekannt, eine Busstation an einer aus mehreren Ventilen bestehenden Ventilstation über eine Busleitung zu steuern, über die auch Sensorrückmeldungen erfolgen können, jedoch werden auch hier zusätzliche elektrische Versorgungsleitungen sowie die pneumatische Leitung benötig, so dass auch hier der Installationsaufwand nicht unerheblich ist.

Aus der DE 29 38 734 A1, der DE 31 47 339 A1, der DE 32 09 189 A1 oder der DE 41 15 403 C2 ist es zwar bekannt, Steuer- und Sensordaten über ein metallisches Rohrleitungsnetz mittels Ultraschall zu übertragen, jedoch ist dieses Verfahren für die üblicherweise aus Kunststoffmaterial bestehenden pneumatischen Leitungen schlecht anwendbar und es werden unabhängig davon separate elektrische Versorgungsleitungen benötigt. Aus der EP 0 797 037 A2 ist allerdings auch ein Rohrleitungsnetz aus Kunststoff bekannt.

Es ist daher die Aufgabe der vorliegenden Erfindung, ein Verfahren und eine Vorrichtung zu schaffen, durch das bzw. durch die die Zahl der Verbindungsleitungen zu einer zu steuernden pneumatischen Vorrichtung deutlich reduziert und die Installation vereinfacht werden kann.

Diese Aufgabe wird erfindungsgemäß durch die Merkmale der unabhängigen Ansprüche 1 und 6 gelöst.

Der Vorteil der erfindungsgemäßen Vorrichtung besteht insbesondere darin, dass über die ohnehin vorhandene pneumatische Leitung neben den Steuerinformationen und Sensorsignalen auch gleichzeitig die Versorgungsenergie zum Betreiben von elektrischen Verbrauchern an oder in der pneumatischen Vorrichtung übertragen wird, so dass diesbezüglich Leitungen entfallen können. Dabei erfolgt die Übertragung über das gasförmige Medium mittels Schallsignalen, Mikrowellen oder Druckänderungen. Aus diesem Grunde ist die Übertragung auch bei den üblicherweise vorhandenen Kunststoffleitungen möglich.

Durch die in den Unteransprüchen aufgeführten Maßnahmen sind vorteilhafte Weiterbildungen und Verbesserungen des im Anspruch 1 angegebenen Verfahrens und der im Anspruch 6 angegebenen Vorrichtung möglich.

Die Übertragung der Daten erfolgt bidirektional, um beispielsweise in der einen Richtung Steuersignale und in der anderen Richtung Sensorsignale übertragen zu können. Zur bidirektionalen Datenübertragung ist sowohl die Steuer- und/oder Datenempfangseinrichtung als auch die pneumatische Vorrichtung mit einem ersten Konverter und mit einem zweiten Konverter versehen, wobei jeweils ein erster Konverter und ein zweiter Konverter auch als kombinierter bidirektionaler Konverter ausgebildet sein kann. Zur Realisierung eignen sich hierzu vor allem piezoelektrische, jedoch auch induktive oder kapazitive Konverter.

Zur Übertragung unterschiedlicher Steuer- und/oder Sensorsignale eignen sich unterschiedliche Frequenzen und/oder Signalfolgen und/oder Druckmodulationen und/oder Druckimpulsfolgen.

Die Schallsignale oder Druckänderungen werden in der pneumatischen Vorrichtung vorzugsweise mittels des Piezoeffekts wenigstens teilweise in elektrische Energie umgesetzt, wozu zweckmäßigerweise ein piezoelektrischer Konverter dient. Alternativ hierzu sind auch induktive oder kapazitive Konverter oder ein Kolbenschwinger einsetzbar.

In einer alternativen Ausführung kann die elektrische Versorgungsenergie in der pneumatischen Vorrichtung auch dadurch gewonnen werden, dass der Druck des gasförmigen Mediums zum Antrieb einer Mikroturbine bzw. eines Mikrogenerators eingesetzt wird.

Um die Versorgungsspannung kontinuierlich zur Verfügung stellen zu können, zum Beispiel auch bei kurzzeitig höherem Energiebedarf, ist in vorteilhafter Weise eine Speichereinrichtung, insbesondere ein Kondensator oder eine Speicherzelle, zur Speicherung der in oder an der pneumatischen Vorrichtung erzeugten elektrischen Versorgungsenergie vorgesehen.

Ein insbesondere als Mikrocomputer ausgebildeter Umsetzer in oder an der pneumatischen Vorrichtung dient in vorteilhafter Weise zur Umsetzung der übertragenen Signale in Steuersignale für wenigstens eine Steuereinrichtung, zum Beispiel ein Ventil, in der pneumatischen Vorrichtung und/oder zur Umsetzung von Sensorsignalen in über die pneumatische Leitung zu übertragene Signale.

Die Steuer- und/oder Datenempfangseinrichtung ist vorzugsweise als an einen Datenbus angeschlossene Busstation ausgebildet. Dabei können an diese Busstation mehrere pneumatische Vorrichtungen über pneumatische Leitungen direkt oder über Verzweigungen angeschlossen sein.

Bei größeren Systemen können auch mehrere Busstationen an den Datenbus angeschlossen sein, die jeweils mit wenigstens einer pneumatischen Vorrichtung verbunden sind.

Der wenigstens eine Konverter und die Mittel zur Bereitstellung von elektrischer Versorgungsenergie sind zweckmäßigerweise in der pneumatischen Vorrichtung integriert, so dass kompakte Anordnungen vorliegen, die zur vollständigen Installation lediglich über eine einzige pneumatische Leitung angeschlossen werden müssen.

Ausführungsbeispiele der Erfindung sind in der Zeichnung dargestellt und in der nachstehenden Beschreibung näher erläutert. Es zeigen:
- Fig. 1: ein Blockschaltbild einer Vorrichtung zur Übertragung von Daten zwischen einer Busstation und einem Pneumatikzylinder,
- Fig. 2: eine ähnliche Anordnung wie in Fig. 1 in einer Detailansicht mit einer Mikroturbine zur Bereitstellung von elektrischer Versorgungsenergie im Pneumatikzylinder,
- Fig. 3: eine schematische Darstellung des Betriebs von drei Pneumatikzylindern über drei Busstationen,
- Fig. 4: eine ähnliche Anordnung, bei der drei Pneumatikzylinder an eine Busstation angeschlossen sind, und
- Fig. 5: eine ähnliche Darstellung wie in Fig. 4, bei der ein Anschluß an einer Busstation über Verzweigungen zu drei Pneumatikzylindern geführt ist.

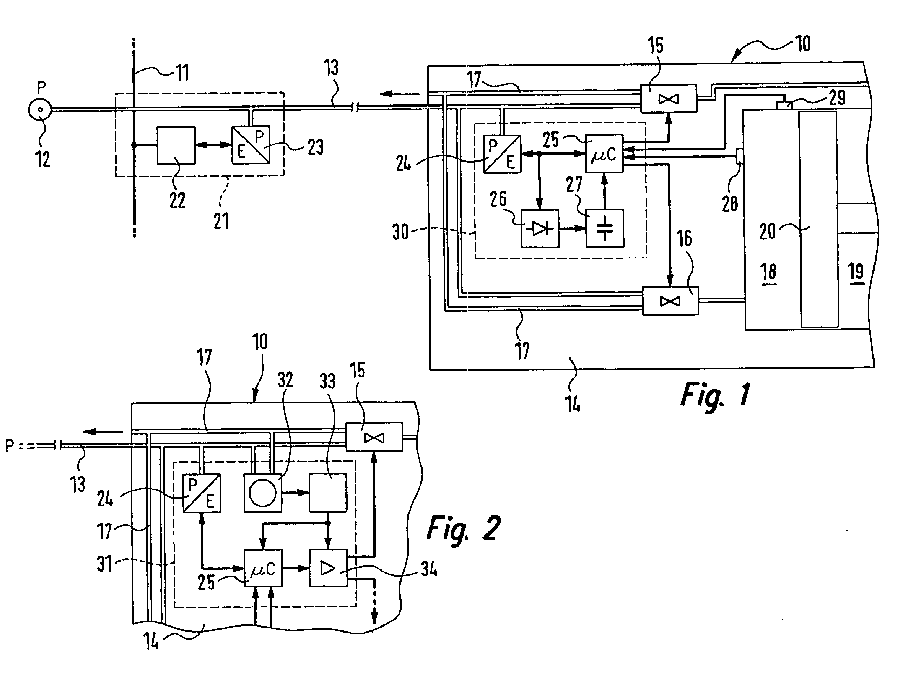

Bei dem in Fig. 1 dargestellten Ausführungsbeispiel der Erfindung wird ein Pneumatikzylinder 10 über einen elektrischen Datenbus 11, beispielsweise einen Feldbus, gesteuert. Eine pneumatische Druckquelle 12 ist über eine aus Kunststoffmaterial bestehende pneumatische Leitung 13 mit dem Pneumatikzylinder 10 verbunden. In einem stirnseitigen Bereich des Gehäuses 14 des Pneumatikzylinders 10 sind zwei Ventile 15, 16 integriert, die beispielsweise als 3/2-Wegeventile ausgebildet sind. Alternativ hierzu könnte beispielsweise auch ein 4/3-Wegeventil treten. Die beiden Ventile 15, 16 sind jeweils einerseits mit der pneumatischen Leitung 13 und einem Entlüftungskanal 17 und andererseits jeweils mit einer von zwei Zylinderkammern 18, 19 zu beiden Seiten eines bewegbaren Kolbens 20 verbunden.

Elektrische Steuersignale für die Signale 15, 16 werden über den Datenbus 11 einer elektronischen Steuer- und Datenempfangseinrichtung 21 zugeleitet. Diese enthält eine an den Datenbus 11 angeschlossene Busstation 22, die über einen bidirektionalen Konverter 23 mit der pneumatischen Leitung 13 verbunden ist. Der bidirektionale Konverter 23 ist beispielsweise als Piezowandler ausgebildet und setzt die zugeführten elektrischen Signale in entsprechende Schallsignale bzw. Tonschwingungen um, die sich im gasförmigen Medium in der Leitung 13 ausbreiten und schließlich einen entsprechenden bidirektionalen Konverter 24 im Pneumatikzylinder 10 erreichen, wo sie wiederum in entsprechende Signale umgesetzt werden. Die Übertragung der in den elektrischen Signalen enthaltenen Daten erfolgt entweder über unterschiedliche Frequenzen, die bis zu Ultraschallfrequenzen reichen können, die auch moduliert sein können, oder über Schallsignalfolgen bzw. entsprechende Druckänderungen oder Druckstöße im gasförmigen Medium. Alternativ hierzu kann die Übertragung auch beispielsweise über Mikrowellen erfolgen, die sich ebenfalls im gasförmigen Medium ausbreiten, wobei dann entsprechende Mikrowellen-Konverter erforderlich sind.

Die vom bidirektionalen Konverter 24 erzeugten elektrischen Signale werden im Gehäuse 14 einem Mikrorechner 25 zugeführt, wo sie decodiert und je nach Decodierung in entsprechende Steuersignale für die beiden Ventile 15, 16 umgewandelt werden.

Zur Stromversorgung des Mikrorechners 25 und direkt oder indirekt der Ventile 15, 16 wird ein Teil der vom Konverter 24 erzeugten elektrischen Signale in einer Gleichrichteranordnung 26 gleichgerichtet und einer Speichereinrichtung 27 zugeführt, die beispielsweise als Kondensator ausgebildet ist. Durch die Speichereinrichtung 27 ist eine ständige Stromversorgung gewährleistet, auch dann, wenn gerade keine Signale über die Leitung 13 ankommen oder ein kurzzeitiger erhöhter Strom- bzw. Energiebedarf vorliegt. In einer einfacheren Ausführung kann auch auf eine Speichereinrichtung 27 verzichtet werden.

Im Hinblick auf die relativ geringe zur Verfügung stehende elektrische Energie sind die Ventile 15, 16 beispielsweise als mehrfach vorgesteuerte Ventilanordnungen ausgebildet, insbesondere auch unter Verwendung von Piezo-Ventilen.

An derartigen Pneumatikzylindern 10 oder anderen pneumatischen Vorrichtungen sind üblicherweise Sensoren angeordnet, deren Sensorsignale der Steuerung rückgemeldet werden müssen. Im Ausführungsbeispiel sind ein Drucksensor 28 und ein Positionssensor 29 zur Erfassung der Kolbenposition dargestellt. Diese sind mit Eingängen des Mikrorechners 25 verbunden, wo die entsprechenden Sensorsignale digitalisiert und codiert werden und in dieser Form dem bidirektionalen Konverter 24 zugeführt werden. Dort werden sie in entsprechende Schall-, Ton- bzw. Drucksignale umgewandelt und über die Leitung 23 dem Konverter 23 zugeführt, wo sie wiederum in elektrische Signale umgewandelt und so der Busstation 22 zugeführt werden. Die entsprechenden Informationen werden dort digitalisiert und über den Datenbus 11 einer nicht dargestellten Masterstation zugeführt, die beispielsweise ein PC sein kann.

Es ist selbstverständlich auch möglich, bei einer dezentralisierten Intelligenz die Sensorsignale auch zum Teil im Mikrorechner 25 und/oder in der Busstation 22 ganz oder teilweise auszuwerten, weiterzubearbeiten oder für die Steuerung zu berücksichtigen.

Anstelle des Mikrorechners 25 kann selbstverständlich auch eine andere Decodier- und Codiereinrichtung treten.

Der Konverter 24, der Mikrorechner 25, die Gleichrichteranordnung 26 und die Speichereinrichtung 27 im Gehäuse 14 des Pneumatikzylinders 10 sind in einer Steuer- und Datenübertragungseinrichtung 30 zusammengefaßt, die beispielsweise als im ganzen einsetzbare oder auch außen anbringbare Einheit ausgebildet sein kann.

Die Datenübertragung über die Leitung 13 in den beiden entgegengesetzten Richtungen kann beispielsweise innerhalb festgelegter Zeitfenster erfolgen oder nach dem Prinzip eines variablen Master-Slave-Systems. Auch die Erzeugung der Versorgungsenergie kann beispielsweise abwechselnd zur Datenübertragung in Zeitfenstern erfolgen, oder aber die Energiespeicherung in der Speichereinrichtung 27 erfolgt jeweils während Perioden, in denen keine Datenübertragung erfolgt, wobei dies vom Mikrorechner 25 gesteuert werden kann. Alternativ hierzu kann auch ständig ein Teil der elektrischen Signale zur Energieversorgung verwendet werden.

In Fig. 2 ist eine alternative Ausgestaltung einer Steuer- und Datenübertragungseinrichtung 31 vorgesehen, die anstelle der Steuer- und Datenübertragungseinrichtung 30 treten kann. Gleiche oder gleichwirkende Bauteile oder Baugruppen sind mit denselben Bezugszeichen versehen und nicht nochmals beschrieben. Die Versorgungsenergie wird hier nicht aus den übertragenen Schallsignalen oder Druckänderungen im gasförmigen Medium gewonnen, sondern der Druck im gasförmigen Medium wird zum Antrieb einer Mikroturbine 32 mit angesetztem oder integriertem Mikrogenerator verwendet. Da die Leitung 13 ständig druckbeaufschlagt ist, kann diese Versorgungsenergie ständig erzeugt werden, so daß auf eine Speichereinrichtung verzichtet werden kann, die selbstverständlich dennoch vorgesehen sein kann. Die durch die Mikroturbine 32 erzeugte elektrische Energie wird in einer Spannungsaufbereitungsschaltung 33 aufbereitet und versorgt den Mikrorechner 25 sowie eine nachgeschaltete Treiberstufe 34 zur Ansteuerung der Ventile 15, 16. Eine solche Treiberstufe 34 kann selbstverständlich auch bei der Steuer- und Datenübertragungseinrichtung 30 vorgesehen sein.

Anstelle der Mikroturbine 32 kann auch ein anderes mikromechanisches System zur Erzeugung elektrischer Energie treten, beispielsweise eine Kolbenschwingeranordnung.

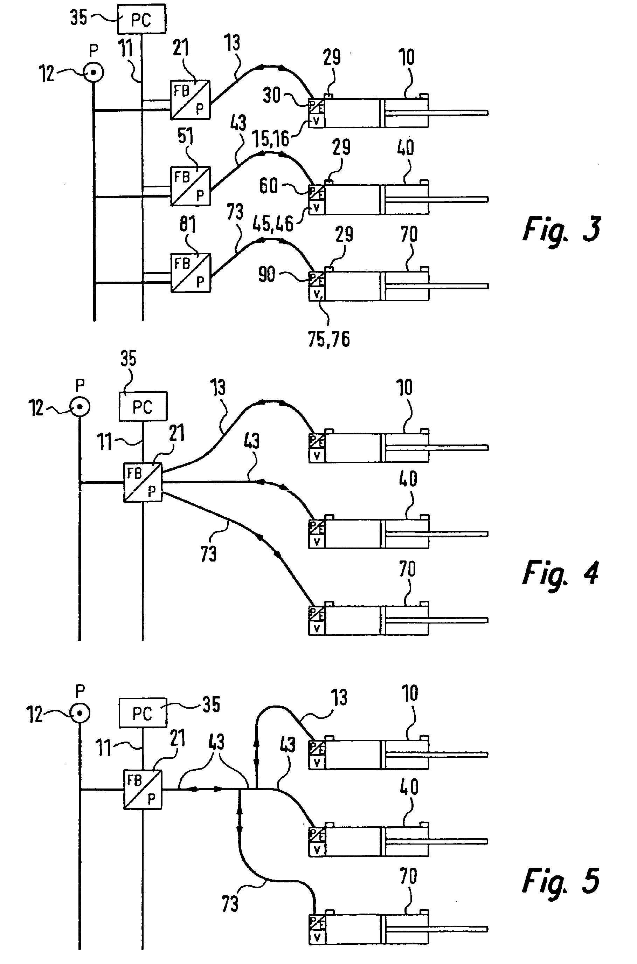

Das in Fig. 3 dargestellte System dient zum Betreiben von drei Pneumatikzylindern 10, 40, 70. Die Steuer- und Datenempfangseinrichtung 21 und der Pneumatikzylinder 10 mit seiner Steuer- und Datenübertragungseinrichtung 30 sowie seinen Ventilen 15, 16 entsprechen der Anordnung gemäß Fig. 1 (oder Fig. 2). An den Datenbus 11, der über eine als PC ausgebildete Masterstation 35 gesteuert wird, sind zwei weitere Steuer- und Datenempfangseinrichtungen 51 und 81 entsprechend angeschlossen, die über Leitungen 43, 73 mit entsprechenden Steuer- und Datenübertragungseinrichtungen 60, 90 mit den Pneumatikzylindern 40, 70 verbunden sind. Die Pneumatikzylinder 40, 70 weisen den Ventilen 15, 16 entsprechende Ventile 45, 46 bzw. 75, 76 auf. Auf diese Weise läßt sich die Gesamtanordnung beliebig erweitern.

Alternativ hierzu ist es auch möglich, gemäß Fig. 4 alle Pneumatikzylinder 10, 40, 70 durch die eine Steuer- und Datenempfangseinrichtung 21 zu steuern, an die hierzu die drei pneumatischen Leitungen 13, 43 und 73 angeschlossen sind. Dabei können auch gemäß Fig. 4 weitere Steuer- und Datenempfangseinrichtungen am elektrischen Datenbus 11 angeschlossen sein, die wiederum jeweils mehrere Pneumatikzylinder oder andere pneumatische Vorrichtungen steuern und/oder deren Sensorsignale empfangen. In Fig. 5 ist eine Variation bezüglich Fig. 4 dargestellt, indem dort an die Steuer- und Datenempfangseinrichtung 21 nur die pneumatische Leitung 43 angeschlossen ist, während die pneumatischen Leitungen 13 und 73 über Verzweigungen bzw. T-Stücke mit dieser Leitung 43 verbunden sind.

Die in den Ausführungsbeispielen dargestellten Pneumatikzylinder 10, 40, 70 sind lediglich beispielhaft dargestellt. Anstelle dieser Pneumatikzylinder oder zusätzlich zu diesen können auch andere pneumatische Vorrichtungen, wie Ventilinseln, pneumatische Antriebe, Wartungsgeräte, oder auch reine Sensoranordnungen treten, bei denen lediglich Sensorrückmeldungen erfolgen, jedoch keine Steuersignale zugeführt werden.

## Patentansprüche

1. Verfahren zur Übertragung von Steuer- und/oder Sensorsignalen zwischen einer elektronischen Steuer- und/oder Datenempfangseinrichtung und einer pneumatischen Vorrichtung, die über eine pneumatische Leitung miteinander verbunden sind, wobei die Übertragung mittels Schallsignalen, Mikrowellen oder Druckänderungen im gasförmigen Medium der Leitung 12; 43; 73) erfolgt, **dadurch gekennzeichnet, dass** die Übertragung von Versorgungsenergie zum Betreiben von elektrischen Verbrauchern an oder in der pneumatischen Vorrichtung (10; 40; 70) ebenfalls über das gasförmige Medium in der aus flexiblem Kunststoffmaterial bestehenden Leitung (13; 43; 73) erfolgt.

2. Verfahren nach Anspruch 1, **dadurch gekennzeichnet, dass** die Übertragung bidirektional erfolgt.

3. Verfahren nach Anspruch 1 oder 2, **dadurch gekennzeichnet, dass** zur Übertragung unterschiedlicher Steuer- oder Sensorsignale unterschiedliche Frequenzen und/oder Signalfolgen und/oder Modulationen und/oder Druckimpulsfolgen vorgesehen sind.

4. Verfahren nach einem der Ansprüche 1 bis 3, **dadurch gekennzeichnet, dass** in der pneumatischen Vorrichtung (10) der Druck des gasförmigen Mediums zum Antrieb einer Mikroturbine (32) eingesetzt wird.

5. Verfahren nach einem der Ansprüche 1 bis 3, **dadurch gekennzeichnet, dass** in der pneumatischen Vorrichtung (10) die Schallsignale oder Druckänderungen mittels des Piezoeffekts wenigstens teilweise in elektrische Energie umgesetzt werden.

6. Vorrichtung zur Übertragung von Steuer- und/oder Sensorsignalen zwischen einer elektronischen Steuer- und/oder Datenempfangseinrichtung und einer pneumatischen Vorrichtung, die über eine aus flexiblem Kunststoffmaterial bestehende pneumatische Leitung miteinander verbunden sind, wobei zur Übertragung der Signale mittels Schallsignalen, Mikrowellen oder Druckänderungen im gasförmigen Medium der Leitung (13; 43; 73) die Steuer- und/oder Datenempfangseinrichtung (21; 51; 81) und die pneumatischen Vorrichtungen (10; 40; 70) mit wenigstens einem ersten Konverter (23) zur Umwandlung von elektrischen Signalen in Schallsignale oder Druckänderungen und mit wenigstens einem zweiten Konverter (24) zur Umwandlung der Schallsignale oder Druckänderungen in elektrische Signale versehen sind, **dadurch gekennzeichnet, dass** Mittel zur Umwandlung von Schallsignalen oder Druckänderungen oder Druck im gasförmigen Medium in elektrische Versorgungsenergie in oder an der pneumatischen Vorrichtung (10; 40; 70) vorgesehen sind.

7. Vorrichtung nach Anspruch 6, **dadurch gekennzeichnet, dass** die Steuer- und/oder Datenempfangseinrichtung (21; 51; 81) mit einem ersten Konverter (23) und die pneumatische Vorrichtung (10; 40; 70) mit einem zweiten Konverter (24) versehen ist.

8. Vorrichtung nach Anspruch 6, **dadurch gekennzeichnet, dass** zur bidirektionalen Datenübertragung sowohl die Steuer- und/oder Datenempfangseinrichtung (21; 51; 81) als auch die pneumatische Vorrichtung (10; 40; 70) mit beiden Arten von Konvertern (23, 24) versehen sind.

9. Vorrichtung nach Anspruch 8, **dadurch gekennzeichnet, dass** jeweils ein erster Konverter (23) und ein zweiter Konverter (24) als kombinierte bidirektionale Konverter ausgebildet sind.

10. Vorrichtung nach einem der Ansprüche 6 bis 8, **dadurch gekennzeichnet, dass** die Konverter (23, 24) als piezoelektrische oder induktive oder kapazitive Konverter ausgebildet sind.

11. Vorrichtung nach einem der Ansprüche 6 bis 10, **dadurch gekennzeichnet, dass** zur Umwandlung von Schallwellen oder Druckänderungen in elektrische Versorgungsenergie ein Konverter (24) oder eine Kolbenschwingeranordnung vorgesehen ist.

12. Vorrichtung nach Anspruch 11, **dadurch gekennzeichnet, dass** der Konverter (24) zur Bereitstellung von Versorgungsenergie identisch mit dem Konverter (24) zur Umwandlung von Schallsignalen oder Druckänderungen in elektrische Steuer und/oder Sensorsignale ist.

13. Vorrichtung nach einem der Ansprüche 6 bis 10, **dadurch gekennzeichnet, dass** zur Umwandlung von Druck in elektrische Versorgungsenergie eine Mikroturbine (32) mit elektrischem Generator vorgesehen ist.

14. Vorrichtung nach einem der Ansprüche 6 bis 13, **dadurch gekennzeichnet, dass** eine Speichereinrichtung (27), insbesondere ein Kondensator oder eine Speicherzellenanordnung, zur Speicherung der in oder an der pneumatischen Vorrichtung (10; 40; 70) erzeugten elektrischen Versorgungsenergie vorgesehen ist.

15. Vorrichtung nach einem der Ansprüche 6 bis 14, **dadurch gekennzeichnet, dass** ein insbesondere als Mikrocomputer ausgebildeter Umsetzer (25) in oder an der pneumatischen Vorrichtung (10; 40; 70) vorgesehen ist, der zur Umsetzung der übertragenen Signale in Steuersignale für wenigstens eine Steuereinrichtung (15, 16) in der pneumatischen Vorrichtung (10; 40; 70) und/oder zur Umsetzung von Sensorsignalen in über die pneumatische Leitung (13; 43; 73) zu übertragende Signale ausgebildet ist.

16. Vorrichtung nach einem der Ansprüche 6 bis 15, **dadurch gekennzeichnet, dass** die Steuer- und/oder Datenempfangseinrichtung (21; 51; 81) als an einen Datenbus (11) angeschlossene Busstation ausgebildet ist.

17. Vorrichtung nach Anspruch 16, **dadurch gekennzeichnet, dass** an die als Busstation ausgebildete Steuer- und/oder Datenempfangseinrichtung (21) mehrere pneumatische Vorrichtungen (10; 40; 70) über pneumatische Leitungen (13; 43; 73) angeschlossen sind.

18. Vorrichtung nach Anspruch 16 oder 17, **dadurch gekennzeichnet, dass** mehrere als Busstationen ausgebildete Steuer- und/oder Datenempfangseinrichtungen (21; 51; 81) an den Datenbus (11) angeschlossen sind, die jeweils mit wenigstens einer pneumatischen Vorrichtung (10; 40; 70) verbunden sind.

19. Vorrichtung nach einem der Ansprüche 6 bis 18, **dadurch gekennzeichnet, dass** der wenigstens eine Konverter (24), die Mittel zur Bereitstellung von elektrischer Versorgungsenergie und der Umsetzer (25) in der pneumatischen Vorrichtung (10; 40; 70) integriert sind.

## Claims

1. Method for transmitting control and/or sensor signals between an electronic control unit and/or data receiving device and a pneumatic apparatus connected to one another by a pneumatic line, the transmission being carried out by means of sound signals, microwaves or pressure changes in the gaseous medium of the line (12; 43; 73), **characterised in that** the supply energy for the operation of electric loads at or in the pneumatic apparatus (10; 40; 70) is likewise transmitted via the gaseous medium in the line (13; 43; 73) made of a flexible plastic material.

2. Method according to claim 1, **characterised in that** the transmission is bidirectional.

3. Method according to claim 1 or 2, **characterised in that** different frequencies and/or signal sequences and/or modulations and/or pressure pulse sequences are provided for the transmission of different control or sensor signals.

4. Method according to any of claims 1 to 3, **characterised in that** the pressure of the gaseous medium is used in the pneumatic apparatus (10) to drive a micro-turbine (32).

5. Method according to any of claims 1 to 4, **characterised in that** the sound signals or pressure changes are in the pneumatic apparatus (10) at least partially converted into electric energy by means of the piezoelectric effect.

6. Device for transmitting control and/or sensor signals between an electronic control unit and/or data receiving device and a pneumatic apparatus connected to one another by a pneumatic line made of a flexible plastic material, wherein, for the transmission of the signals by means of sound signals, microwaves or pressure changes in the gaseous medium of the line (13; 43; 73), the control unit and/or the data receiving device (21; 51; 81) and the pneumatic apparatus (10; 40; 70) are provided with at least one first converter (23) for converting electric signals into sound signals or pressure changes and with at least one second converter (24) for converting the sound signals or pressure changes into electric signals, **characterised in that** means are provided for converting sound signals or pressure changes or pressure in the gaseous medium into electric supply energy in or at the pneumatic apparatus (10; 40; 70).

7. Device according to claim 6, **characterised in that** the control unit and/or the data receiving device (21; 51; 81) is/are provided with a first converter (23) and the pneumatic apparatus (10; 40; 70) is provided with a second converter (24).

8. Device according to claim 6, **characterised in that**, for bidirectional data transmission, both the control unit and/or the data receiving device (21; 51; 81) and the pneumatic apparatus (10; 40; 70) are provided with both types of converter (23, 24).

9. Device according to claim 8, **characterised in that** a first converter (23) and a second converter (24) are each designed as bidirectional converters.

10. Device according to any of claims 6 to 8, **characterised in that** the converters (23, 24) are designed as piezoelectric or inductive or capacitive converters.

11. Device according to any of claims 6 to 10, **characterised in that** a converter (24) or a piston oscillator arrangement is provided for converting sound waves or pressure changes into electric supply energy.

12. Device according to claim 11, **characterised in that** the converter (24) for the provision of supply energy is identical to the converter (24) for converting sound waves or pressure changes into electric control and/or sensor signals.

13. Device according to any of claims 6 to 10, **characterised in that** a micro-turbine (32) with an electric generator is provided for converting pressure into electric supply energy.

14. Device according to any of claims 6 to 13, **characterised in that** a first storage device (27), in particular a condenser or a storage cell arrangement, is provided for storing the electric supply energy generated in or at the pneumatic apparatus (10; 40; 70).

15. Device according to any of claims 6 to 14, **characterised in that** a converter (25) designed in particular as a microcomputer is provided in or at the pneumatic apparatus (10; 40; 70) for the conversion of the transmitted signals into control signals for at least one control unit (15, 16) in the pneumatic apparatus (10; 40; 70) and/or for the conversion of sensor signals into signals for transmission via the pneumatic line (13; 43; 73).

16. Device according to any of claims 6 to 15, **characterised in that** the control unit and/or data receiving device (21; 51; 81) is/are designed as a bus station connected to a data bus (11).

17. Device according to claim 16, **characterised in that** several pneumatic apparatuses (10; 40; 70) are connected to the control unit and/or data receiving device (21) designed as a bus station via pneumatic lines (13; 43; 73).

18. Device according to claim 16 or 17, **characterised in that** several control units and/or data receiving devices (21; 51; 81) designed as bus stations are connected to the data bus (11), each being connected to at least one pneumatic apparatus (10; 40; 70).

19. Device according to any of claims 6 to 18, **characterised in that** the at least one converter (24), the means for providing electric supply energy and the converter (25) are integrated into the pneumatic apparatus (10; 40; 70).

## Revendications

1. Procédé pour la transmission de signaux de commande et/ou de signaux sensoriels entre un dispositif électronique de commande et/ou de réception de données et un dispositif pneumatique, lesquels communiquent entre eux via une conduite pneumatique, la transmission étant effectuée au moyen de signaux acoustiques, de micro-ondes ou de variations de la pression dans le milieu gazeux de la conduite (13 ; 43 ; 73), **caractérisé en ce que** la transmission de l'énergie d'alimentation pour le fonctionnement des consommateurs électriques sur ou dans le dispositif pneumatique (10 ; 40 ; 70) s'effectue également par l'intermédiaire du milieu gazeux dans la conduite (13 ; 43 ; 73) réalisée dans une matière plastique flexible.

2. Procédé selon la revendication 1, **caractérisé en ce que** la transmission est bidirectionnelle.

3. Procédé selon la revendication 1 ou 2, **caractérisé en ce que** pour la transmission de signaux de commande et/ou de signaux sensoriels différents, il est prévu différentes fréquences et/ou séries de signaux et/ou modulations et/ou séries d'impulsions de pression.

4. Procédé selon l'une quelconque des revendications 1 à 3, **caractérisé en ce que** dans le dispositif pneumatique (10), la pression du milieu gazeux est utilisée pour l'entraînement d'une micro-turbine (32).

5. Procédé selon l'une quelconque des revendications 1 à 3, **caractérisé en ce que** dans le dispositif pneumatique (10), les signaux acoustiques ou les variations de pression sont transformées au moins en partie en énergie électrique au moyen de l'effet piézoélectrique.

6. Dispositif pour la transmission de signaux de commande et/ou de signaux sensoriels entre un dispositif électronique de commande et/ou de réception de données et un dispositif pneumatique, lesquels communiquent entre eux via une conduite pneumatique réalisée dans une matière plastique flexible, le dispositif de commande et/ou de réception de données (21 ; 51 ; 81) et les dispositifs pneumatiques (10 ; 40 ; 70) étant munis au moins d'un premier convertisseur (23) pour transformer les signaux électriques en signaux acoustiques ou en variations de pression et au moins d'un deuxième convertisseur (24) pour transformer les signaux acoustiques ou les variations de pression en signaux électriques, en vue de la transmission des signaux au moyen de signaux acoustiques, de micro-ondes ou de variations de la pression dans le milieu gazeux de la conduite (13 ; 43 ; 73), **caractérisé en ce que** des moyens permettant de transformer les signaux acoustiques ou les variations de pression ou la pression dans le milieu gazeux en énergie d'alimentation sont prévus dans ou sur le dispositif pneumatique (10 ; 40 ; 70).

7. Dispositif selon la revendication 6, **caractérisé en ce que** le dispositif de commande et/ou de réception de données (21 ; 51 ; 81) est muni d'un premier convertisseur (23) et le dispositif pneumatique (10 ; 40 ; 70) est muni d'un deuxième convertisseur (24).

8. Dispositif selon la revendication 6, **caractérisé en ce que** pour la transmission bidirectionnelle des données, le dispositif de commande et/ou de réception de données (21 ; 51 ; 81), de même que le dispositif pneumatique (10 ; 40 ; 70) sont munis des deux types de convertisseurs (23, 24).

9. Dispositif selon la revendication 8, **caractérisé en ce que** dans chaque cas un premier convertisseur (23) et un deuxième convertisseur (24) sont réalisés sous la forme de convertisseurs bidirectionnels combinés.

10. Dispositif selon l'une quelconque des revendications 6 à 8, **caractérisé en ce que** les convertisseurs (23, 24) sont configurés sous la forme de convertisseurs piézoélectriques ou inductifs ou capacitifs.

11. Dispositif selon l'une quelconque des revendications 6 à 10, **caractérisé en ce que** pour la transformation des ondes acoustiques ou des variations de pression en énergie électrique d'alimentation, il est prévu un convertisseur (24) ou un système oscillateur à piston.

12. Dispositif selon la revendication 11, **caractérisé en ce que** le convertisseur (24) pour la mise à disposition de l'énergie d'alimentation est identique au convertisseur (24) pour la transformation des signaux acoustiques ou des variations de pression en signaux électriques de commande et/ou en signaux sensoriels.

13. Dispositif selon l'une quelconque des revendications 6 à 10, **caractérisé en ce que** pour convertir la pression en énergie électrique d'alimentation, il est prévu une micro-turbine (32) avec un générateur électrique.

14. Dispositif selon l'une quelconque des revendications 6 à 13, **caractérisé en ce qu'**il est prévu un dispositif accumulateur (27), en particulier un condensateur ou un ensemble de cellules d'accumulation pour accumuler l'énergie électrique d'alimentation dans ou sur le dispositif pneumatique (10 ; 40 ; 70).

15. Dispositif selon l'une quelconque des revendications 6 à 14, **caractérisé en ce qu'**un dispositif de conversion (25), configuré en particulier sous forme de micro-ordinateur, est prévu dans ou sur le dispositif pneumatique (10 ; 40 ; 70), lequel est configuré pour convertir les signaux transmis en signaux de commande pour au moins un dispositif de commande (15, 16) dans le dispositif pneumatique (10 ; 40 ; 70) et/ou pour convertir les signaux sensoriels en signaux à transmettre via la conduite pneumatique (13 ; 43 ; 73).

16. Dispositif selon l'une quelconque des revendications 6 à 15, **caractérisé en ce que** le dispositif de commande et/ou de réception de données (21 ; 51 ; 81) est configuré sous la forme d'une borne de bus raccordée à un bus de données (11).

17. Dispositif selon la revendication 16, **caractérisé en ce que** plusieurs dispositifs pneumatiques (10 ; 40 ; 70) sont raccordés via des conduites pneumatiques (13 ; 43 ; 73) au dispositif de commande et/ou de réception de données (21) configuré sous forme de borne de bus.

18. Dispositif selon la revendication 16 ou 17, **caractérisé en ce que** plusieurs dispositifs de commande et/ou de réception de données (21 ; 51 ; 81) configurés sous forme de bornes de bus sont raccordés au bus de données (11) et sont reliés chacun à au moins un dispositif pneumatique (10 ; 40 ; 70).

19. Dispositif selon l'une quelconque des revendications 6 à 18, **caractérisé en ce que** ledit au moins un convertisseur (24), les moyens permettant la mise à disposition de l'énergie électrique d'alimentation et le dispositif de conversion (25) sont intégrés dans le dispositif pneumatique (10 ; 40 ; 70).
